# EUROPEAN PATENT SPECIFICATION

(11) **EP 4 028 341 B1**
(45) Date of publication and mention of the grant of the patent: **17.07.2024**
(21) Application number: 20728181.7
(22) Date of filing: 12.03.2020
(51) Int. Cl.: B65G 1/04

(54) **AUTOMATED STORAGE TOWER FOR STORING PRODUCTS, IN PARTICULAR LONGITUDINAL PRODUCTS**
AUTOMATISIERTER LAGERTURM ZUM LAGERN VON PRODUKTEN, INSBESONDERE VON LÄNGLICHEN PRODUKTEN
TOUR DE STOCKAGE AUTOMATISÉ POUR LE STOCKAGE DE PRODUITS, EN PARTICULIER DE PRODUITS LONGITUDINAUX

(30) Priority: 11.09.2019 IT 201900015971
(43) Date of publication of application: 20.07.2022
(73) Proprietor: Piazza, Marco, 36015 Schio (VI) (IT); Piazza, Antonio, 36015 Schio (VI) (IT)
(72) Inventor: PIAZZA, Antonio, 36015 Schio (VI) (IT)
(74) Representative: Autuori, Angelo
(86) International application number: PCT/IB2020/052228
(87) International publication number: WO 2021/048639

(56) References cited:
- DE-U1- 20 105 582
- DE-U1- 20 304 872
- DE-U1- 202006 018 793
- FR-A1- 2 451 874

## Description

### Field of the invention

The present invention generally regards the technical field of automated storage units, and it particularly regards an automated storage tower for storing products, in particular of longitudinal products.

### State of the Art

DE 201 05 582 U1 discloses an automated storage tower for storing products according to the preamble of claim 1.

Currently known are automated storage towers for storing products, in particular of the longitudinal type, for example pipes, sections or sheets, having a support structure consisting of welded metal sections.

The products are displaced by one or more units physically connected to each other, for example by means of a connection rod, and displaced by means of catenaries or similar means.

One of the major drawbacks observed for such storage towers lies in their considerable overall dimension during transportation from the site of construction to the site of use.

However, such structures are not very versatile should the user need a change in the storage capacity. The above results in high costs.

### Summary of the invention

An object of the invention is to at least partly overcome the drawbacks outlined above, by providing an automated storage tower having characteristics of high functionality, constructive simplicity and cost-effectiveness.

Another object of the invention is to provide an automated storage tower that has the minimum overall dimension during transportation from the production site to the use site.

Another object of the invention is to provide an automated storage tower that has minimum costs.

Another object of the invention is to provide an automated storage tower that allows to vary the storage capacity.

These and other objects which will become more apparent hereinafter, are achieved by an automated storage tower according to claim 1 and a method according to claim 13.

The dependent claims describe advantageous embodiments of the invention.

### Brief description of the drawings

Further characteristics and advantages of the invention will become more apparent in the light of the detailed description of some preferred but non-exclusive embodiments of an automated storage tower 1, illustrated by way of non-limiting example with reference to the attached drawings, wherein:
**FIG. 1** is an axonometric view of an embodiment of the automated storage tower **1** assembled;
**FIG. 2** is an axonometric view of the embodiment of the automated storage tower **1** of FIG. 1 exploded, wherein the panels 5 have been removed for the sake of simplicity;

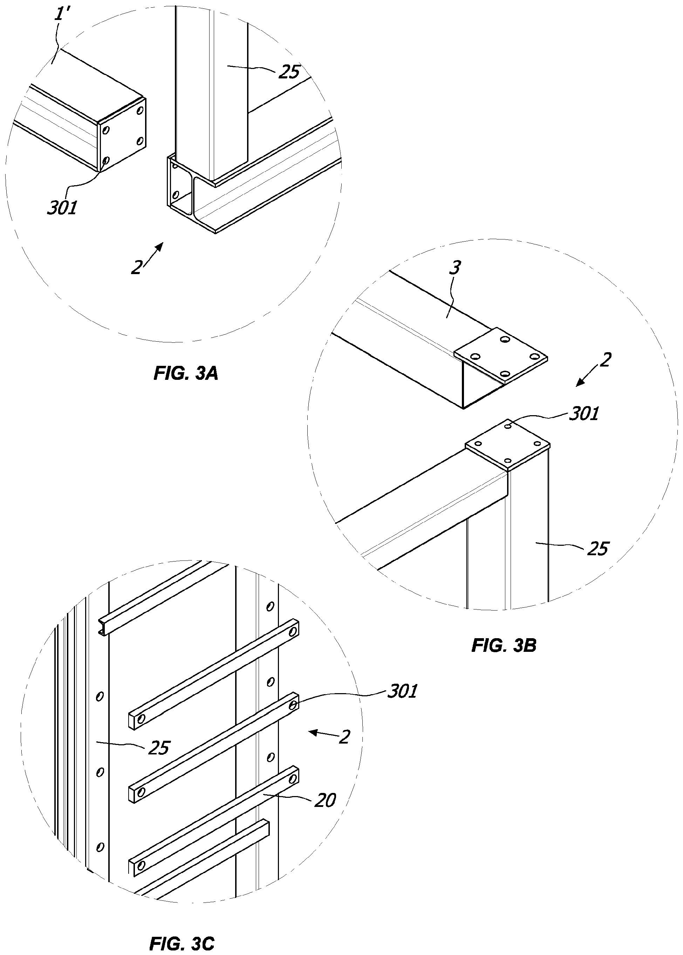

**FIGS. 3A, 3B** and **3C** are enlarged figures of some details of the embodiment of the automated storage tower **1** of FIG. 1;
**FIG. 4A** is an axonometric figure of some details of a further embodiment of the automated storage tower 1, with **FIG. 4D** showing some enlarged details;
**FIG. 4B** is an axonometric figure of a further embodiment of the container **4;**
**FIG. 4C** is an axonometric figure of some details of a further embodiment of the automated storage tower **1,** with **FIG. 4E** showing some enlarged details;
**FIG. 5** is an axonometric figure of some details of a further embodiment of the support structure **10,** of the automated storage tower **1;**
**FIG. 6** is an axonometric figure of some details of an embodiment of the motor-driven carriage **SV;**
**FIG. 7** is an axonometric figure of some details of an embodiment of the container **4;**
**FIG. 8** is an axonometric figure of some details of a further embodiment of the motor-driven carriage **SV;**
**FIG. 9** is an axonometric figure of a further embodiment of the automated storage tower 1, with FIG. 9A showing some enlarged details;
**FIG. 10** is an axonometric figure of some details of a further embodiment of the first or second displacement units;
**FIG. 11** is an axonometric figure of some details of a further embodiment of the first and second displacement units.

### Detailed description of some preferred embodiments

Described with reference to the aforementioned figures is an automated storage tower 1, suitable for storing products of any kind. In particular, the automated storage unit 1 is suitable for storing longitudinal products, such as for example pipes, sections, sheets or bars. In the technical field of automation, multi-storey warehouses are also called "storage towers" or simply "towers".

In the attached figures, the products to be stored have not been shown since they are per se known. The present invention can include various parts and/or similar or identical elements. Unless otherwise specified, similar or identical parts and/or elements will be indicated with a single reference number or abbreviation, meaning that the described technical characteristics are common to all similar or identical parts and/or elements.

According to the invention, the automated storage unit **1** comprises a support structure **10,** a plurality of containers or support planes **4** for storing the products and means for the displacement of the latter.

It is clear that even if in the following description reference is made only to containers 4, the automated storage unit **1** may include containers and support planes or only support planes for the products to be stored, without departing from the scope of protection of the attached claims.

The support structure **10** consists of metal sections and the container can be made of metal material.

The containers **4** may have an essentially longitudinal extension, so as to define an axis **Z'.**

The support structure **10** may comprise two or more upright elements **2,** substantially equal to each other, with vertical extension defining respective mutually facing planes **π1**, substantially parallel and mutually connected, for example, by means of reinforcement crosspieces **3,** preferably arranged at the upper end of the reinforcement elements **2** and preferably they extend horizontally.

The upright elements **2** can be fixed directly to the ground, or, preferably, they can be further connected by base sections **1',** the latter being suitable to be fixed to the ground for example by means of suitable brackets.

Bracing and/or further connection sections may also be present between the upright elements **2,** without departing from the scope of protection of the attached claims.

Each upright element **2** may include structural sections **25,** which may be substantially vertical, and support crosspieces **20, 20'; 200, 200',** which may define respective axes **Y1, Y3** which may be substantially horizontal.

The crosspieces **20, 20'; 200, 200'** can all be substantially parallel to each other and mutually superimposed, so that the seats **20, 20'** define a plane **π2** and the seats **200, 200'** define a plane **π3**. The planes **π2** and **π3** may face each other and be substantially parallel to each other, and they may be substantially perpendicular to the plane **π1** defined by the upright elements **2.**

The crosspieces **20, 20'; 200, 200'** can preferably be aligned, so that the relative axes **Y1, Y3** can coincide.

Although a support structure **10** having two columns of facing support crosspieces **20, 20'; 200, 200'** will be described hereinafter in the present description, it is clear that each upright element **2** can also include a single column of crosspieces, i.e. only the crosspieces **20, 20'** or only the crosspieces **200, 200',** without departing from the scope of protection of the attached claims.

Each of the support crosspieces **20; 200** can cooperate with the corresponding opposite support crosspiece **20'; 200'** for supporting a respective container **4** at the respective opposite ends **40, 40'.**

In this manner, a plurality of superimposed storage seats **22, 22'** will be defined. Each seat **22, 22'** can be defined by a respective pair of opposite support crosspieces **20, 20'; 200, 200',** so that the containers **4** can be supported by the crosspieces **20, 20'; 200, 200'** exclusively at the opposite ends **40, 40'** thereof.

To this end, each container **4** is provided at the ends **40, 40'** with wheels **R,** slidable on the crosspieces **20, 20'; 200, 200'.**

Preferably, the upright elements **2** can be obtained by coupling the structural sections **25** and the support crosspieces **20, 20'; 200, 200'** by means of removable fixing means, such as for example screws or bolts **300** inserted into special holes **301.**

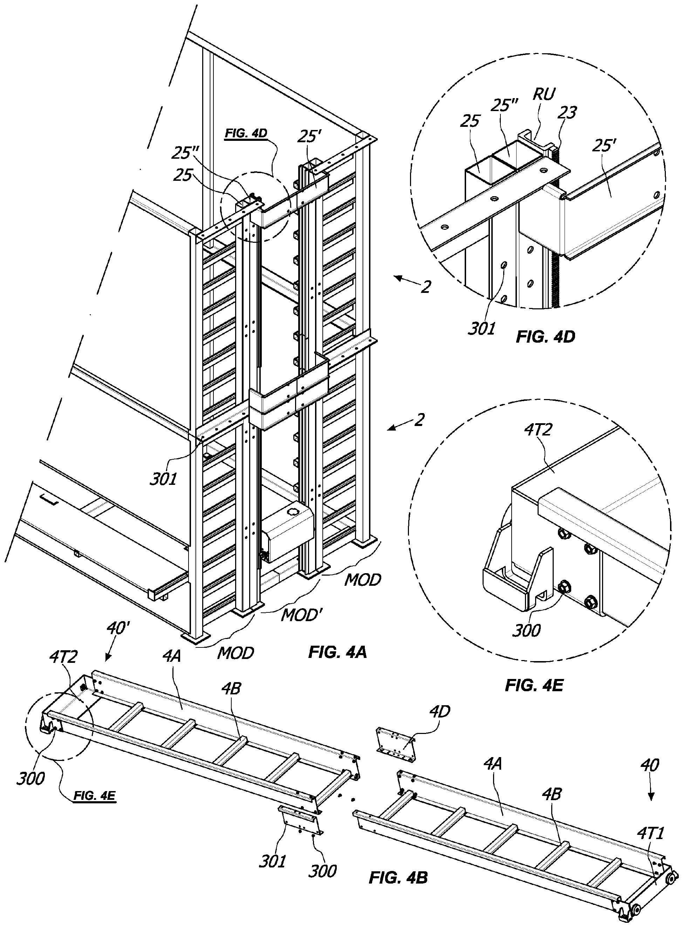

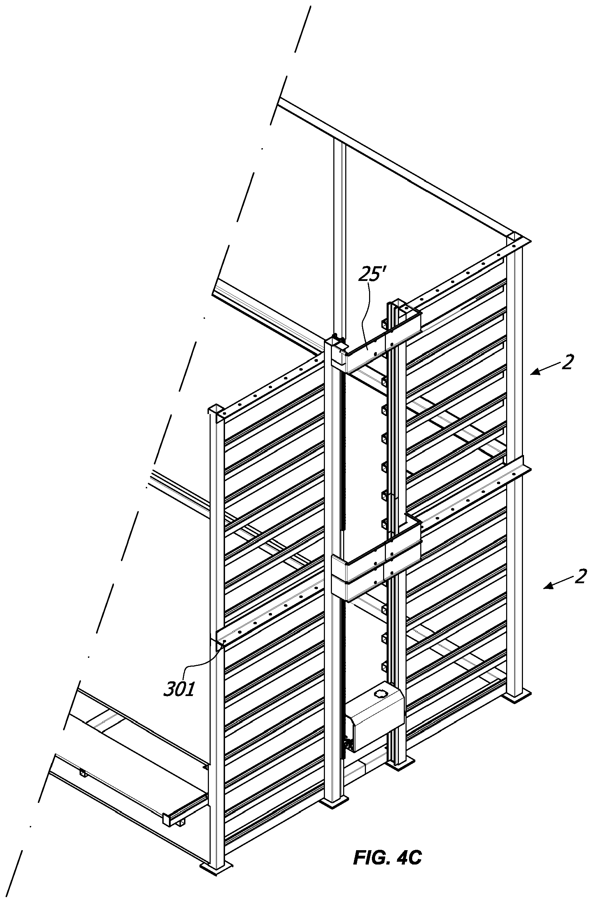

Thanks to such characteristic, it will be possible, for example, to replace, if necessary, the support crosspieces **20, 20'; 200, 200'** with longer or shorter crosspieces, as shown for example in FIG. 4C, or extend the crosspieces by joining two or more sets of predetermined length so that each crosspiece defines a module. This allows to vary the storage capacity of the storage unit **1,** widening it or narrowing it in the direction of the axes **Y1, Y3** whenever needed.

In a preferred but non-exclusive embodiment, for example illustrated in FIGS. 4A and 4D, at the centre of the upright elements **2** there may be pairs of structural sections **25, 25"** arranged side by side and mutually connected by means of removable fixing means. This allows, whenever needed, to insert one or more modules **MOD** which include two structural sections **25** and several crosspieces **20, 20'; 200, 200'** and/or one or more modules **MOD'** which include two structural sections **25** provided with rack **23** and guide **PC** and a motor-driven carriage **SV.**

On the other hand, the structural sections **25** can be replaced with longer or shorter sections. This allows to vary the storage capacity of the storage unit **1,** increasing or decreasing the height thereof whenever needed.

Possibly, in combination or irrespectively of the above, the structural sections **25** may be configured to be coupled to other structural sections **25** by means of removable fixing means, such as for example screws or bolts.

This allows to increase the height of the storage unit **1** by joining together two or more structural sections **25** of predetermined length, so that each structural section defines a module.

Preferably, in combination or irrespectively of the above, each of the upright elements **2,** which may for example have the crosspieces **20, 20'; 200, 200'** welded or removably fixed to the structural sections **25,** may comprise at least one of the end zones, and preferably both end zones, which can be mutually removably connected with at least one other corresponding upright element **2,** like in the embodiment of FIG. 4A.

In this manner, each upright element **2** will define an actual module.

In a preferred but non-exclusive embodiment, shown in FIG. 4A, the central structural sections **25,** which, as described hereinafter, can act as a guide for the motor-driven carriage **SV,** can be physically connected to each other by means of the bracket **25',** the latter in turn can be obtained as two half-brackets which can be removably connected so as to allow the use of a wider motor-driven carriage **SV** whenever needed.

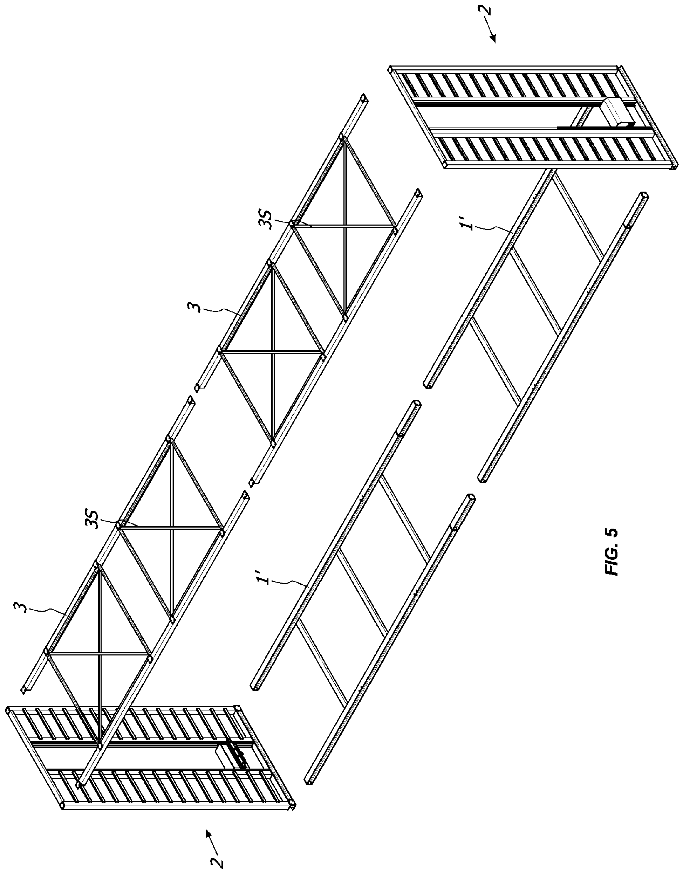

Optionally, in combination or irrespectively of the above, the base sections **1'** and/or the reinforcement crosspieces **3** can be coupled to the upright elements **2** by means of removable fixing means, for example screws or bolts, as shown for example in FIG. 5.

Thanks to such characteristic, the base sections **1'** and/or the reinforcement crosspieces **3** could for example be replaced with sections and/or crosspieces that are longer or shorter, or the sections and/or the crosspieces could be extended by joining two or more sets of predetermined length so that each base section or reinforcement crosspiece defines a module.

This allows to vary the storage capacity of the storage unit 1, extending - whenever needed - in the direction of the axis Z defined by the base sections 1' and/or by the reinforcement crosspieces **3.**

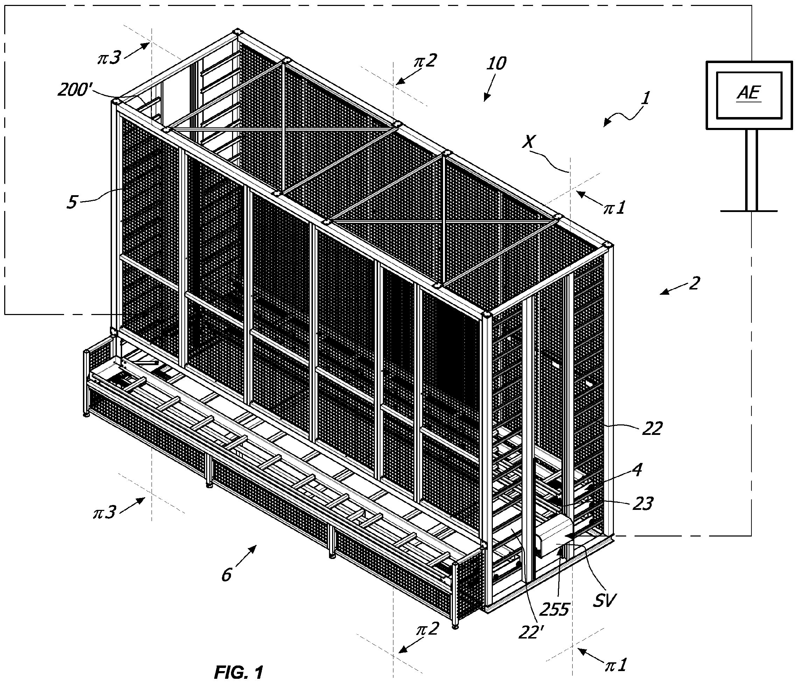

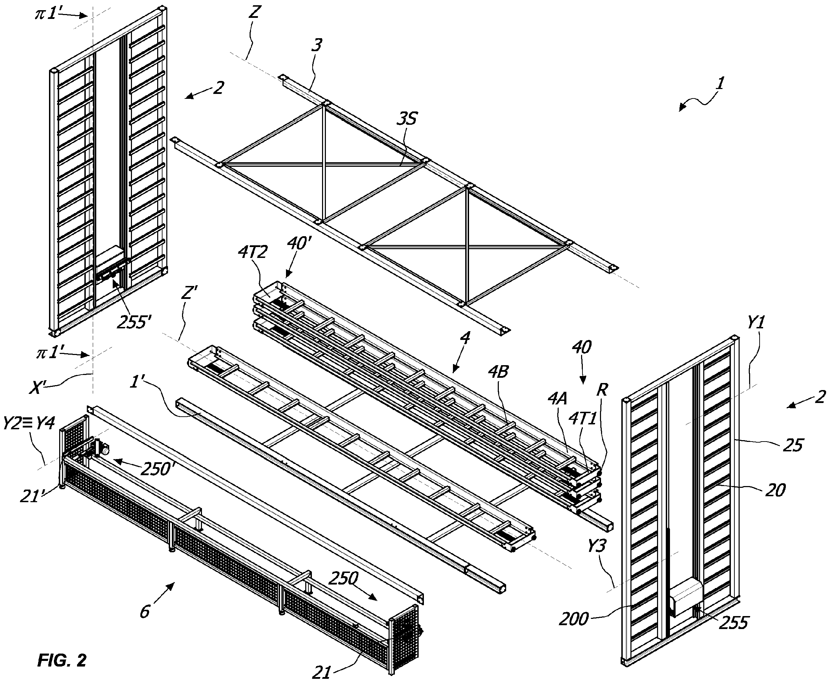

As illustrated in FIGS. 1 and 2, the support structure **10** consists of metal sections connected to each other in a removable manner, so that the support structure **10** is modular and it is possible to vary the dimensions thereof in length, width and height, as illustrated above.

This also allows to minimise transportation costs, since the overall dimension of the disassembled storage unit **1** is minimal.

The support structure **10** may further include, in a per se known manner, safety panels **5** on the sides and upper closing elements **3S.** Should the dimensions of the support structure vary, these components may vary - whenever needed - preferably in a modular manner.

Should the length of the storage unit **1** vary, i.e. should the dimension along the axis **Z** vary, it will be necessary to vary the length of the containers **4** too.

To this end, containers **4** of greater or lesser length may be used, depending on the needs.

However, each container **4** may advantageously include a support frame and a pair of end heads **4T1, 4T2** mutually connected to each other by means of first removable fixing means.

In this manner, if necessary, the support frame can be replaced with a longer or shorter support frame, or the support frame can be extended by joining two or more sets of predetermined length so that each support frame defines a module.

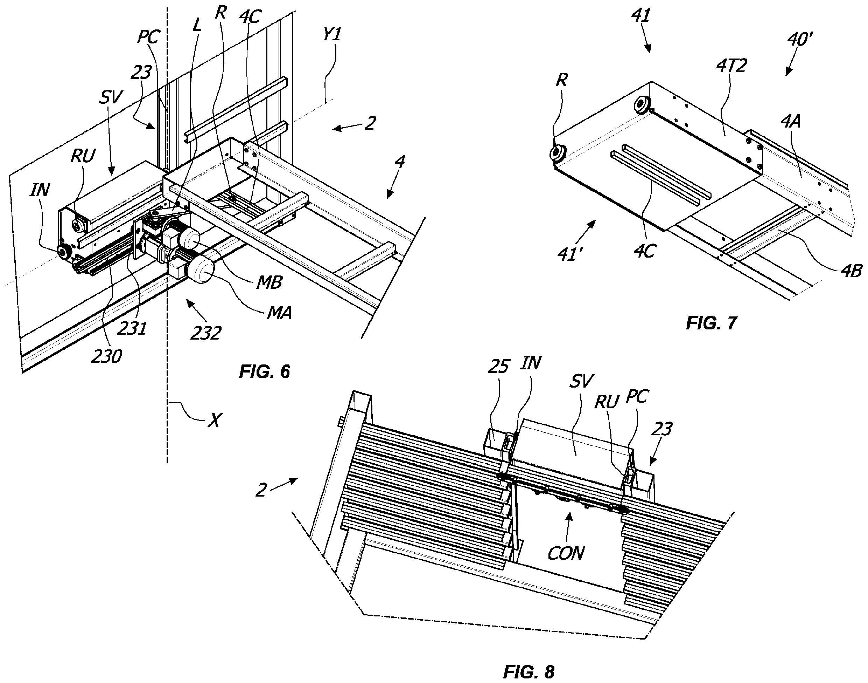

In a preferred but non-exclusive embodiment, illustrated for example in FIG. 7 and 4B, the support frame may consist of a pair of side sections **4A** connected to each other by a plurality of crosspieces **4B,** in a removable manner.

The container can be left without a bottom, as shown in FIG. 7, or a plate acting as a bottom can be inserted thereinto.

In this manner, each side section **4A** will define an actual module, which can be connected to other modules by means of brackets **4D.**

The configuration mentioned above makes the container particularly light and strong at the same time.

The displacement means may be susceptible to displace each container **4** between an inoperative position which it takes when it is in the respective storage seat **22, 22'** and a working position of the products spaced from the latter.

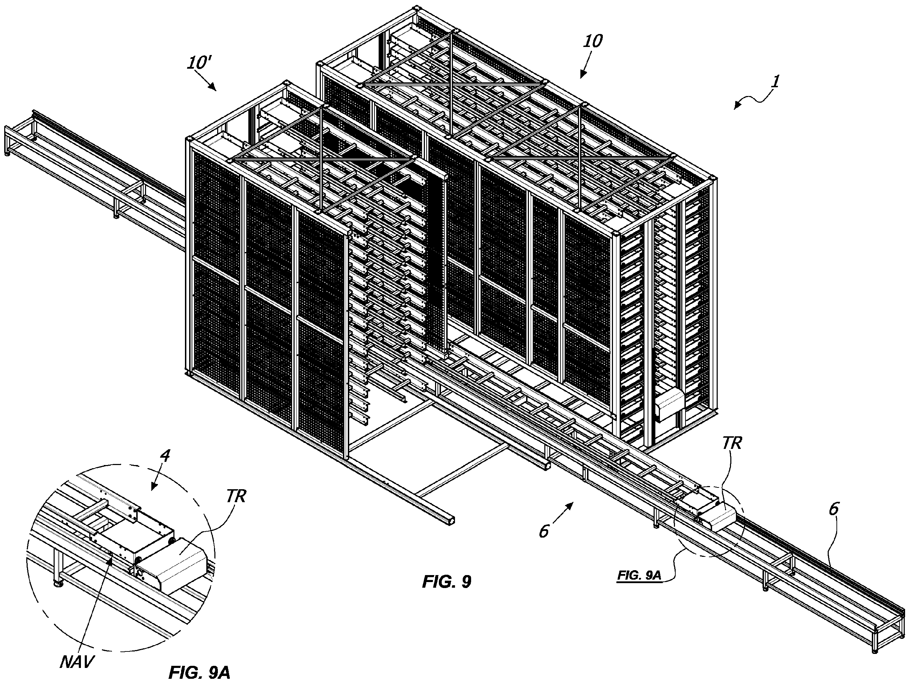

In such working position it will be possible to pick up or load the products from/into the containers **4** or to transport them to another zone by means of special transportation means, for example, a forklift or a shuttle **NAV** with moveable slide **TR** on tracks **6',** as shown in FIG. 9.

To this end, in a preferred but non-exclusive embodiment, the automated storage unit **1** may further comprise a working bay **6.** Furthermore, in the embodiment of FIG. 9, the working bay **6** can be an integral part of a track system **6'.**

According to the invention, the displacement means comprises a pair of first displacement units **255, 255'** and preferably a pair of cond displacement units **250, 250' in** the embodiments in which the working bay 6 is present

In the embodiments in which the working bay 6 is present, the first displacement units **255, 255'** will displace the containers **4** between the inoperative position and an operative position, while the second displacement units will displace the containers **4** between the operative position and the working position on the working bay **6.**

On the other hand, in the embodiments in which the working bay 6 is not present, the first displacement units **255, 255'** will displace the containers **4** between the inoperative position and an operative position which will coincide with the working position. In this latter position the container **4** can be arranged in one of the seats **22, 22',** left suitably empty, or it can remain on the first displacement units **255, 255'** so as to allow one or more operators to pick up the contents thereof or to transport it to another zone.

Although an automated storage unit **1** provided with a working bay **6** will be described hereinafter in the present description, it is clear that the automated storage unit **1** may or may not include the latter without departing from the scope of protection of the attached claims.

The working bay **6** may include a support frame with a pair of opposite support crosspieces **21, 21'** defining respective axes **Y2, Y2'** substantially parallel to each other and to axes **Y1, Y1'.**

Similarly to the crosspieces **20, 20'; 200, 200'**, the opposite support crosspieces **21, 21'** can cooperate with each other to support the respective container **4 at** the respective opposite ends **40, 40'** when it is in the working position.

Thus, each container **4** can suitably be supported in the inoperative and working positions exclusively by the respective first support crosspieces **20, 20'; 200, 200'** and **21, 21',** at the relative opposite ends **40, 40'.**

In a preferred but non-exclusive embodiment, the working bay **6** can be arranged laterally to the plane **π2** or **π3**, with the main extension axis thereof substantially parallel to the latter.

Even though the working bay **6** will be described hereinafter arranged laterally to the plane **π2**, it is clear that it can be arranged laterally to the plane **π3** or that the storage unit 1 can include two working **bays 6** arranged laterally to both the planes **π2** and **π3**, without departing from the scope of protection of the attached claims.

In case of a working bay **6** arranged laterally to the plane **π2**, the support crosspieces **200, 200'** adjacent thereto may be designated to receive the containers **4** in the operative position. The corresponding seat **22'** can be left empty, i.e. without containers **4,** so as to define the operative position.

In this case, the support crosspieces **200,** 200' adjacent to the working bay **6** can be advantageously aligned with the support crosspieces **21, 21',** so that the axes **Y3, Y3'** and the axes **Y2, Y2'** coincide.

In this manner, the container **4** can be displaced by translation along the coincident axes mentioned above. As illustrated above, this translation will be promoted by the second displacement units, which can be integrated in the working bay **6.**

Each of the first and second displacement units can interact with a respective opposite end **40, 40'** of each container **4,** as better illustrated below.

However, each of the first and second displacement units can be guided respectively along a substantially vertical translation direction **X, X'** and along a translation direction **Y4, Y4',** which can coincide with the axes **Y3, Y3'** and **Y2, Y2'.**

The first and second displacement units can therefore promote the displacement of each container **4** between the inoperative and working positions passing through an intermediate transportation position.

To this end, the first displacement units **255, 255'** can promote:
- a first translation of the container **4** between the inoperative and transportation positions along a respective axis **Y1, Y1';**
- the translation of the container **4 to** the transportation position along the direction **X, X';**
- a second translation of the container **4** between the transportation and operative positions along a respective axis **Y3, Y3'** coinciding with **Y2, Y2'.**

From the operative position, the second displacement units can promote the translation of the container **4** up to the working position along a respective axis **Y4, Y4',** which can be coincident with the aforementioned axes **Y3, Y3'** and **Y2, Y2'.**

Advantageously, each upright element **2** can comprise guide means suitable to guide the first displacement unit along a translation direction **X, X'** substantially vertical and parallel to or lying on the plane **π1, π1'.**

Said guide means may comprise at least one first rack **23** arranged on the central sections **25** defining the direction **X, X'** and vertical guides **PC** in which the wheels **RU** slide.

The first displacement units **255, 255'** include a respective motor-driven carriage **SV,** which may include pinions **IN** cooperating with the rack **23** to translate along the respective direction **X, X'.**

Advantageously, the motor-driven carriage **SV** can be interposed between the planes **π2**, **π3**, and more particularly between the central sections **25.** This allows to displace containers **4** present in both seats **22, 22'.**

Each motor-driven carriage **SV** includes motion promoting means capable of acting on each container **4** to displace it, as described above.

It is clear that the means for promoting the motion of the first displacement units **255, 255'** and the second displacement units **250, 250'** can be equal.

To this end, the motion promoting means may comprise a motor-driven slide **232** and means **SL** for guiding the latter along a substantially horizontal translation direction, which may for example include a rack **230.** Furthermore, each motor-driven slide **232** may include pinions **231** cooperating with the rack **230.**

The motor-driven slide **232** may also include gripping means acting selectively on the respective end **40, 40'** of the respective container **4 to** drive the latter in motion.

FIGS. 6, 10 and 11 show various embodiments of the gripping means, for example defined by a lever L with a wheel **R,** by a cam **CAM** or by a piston or actuator **GAO.**

In any case, the gripping means may be sized and/or configured to act on the respective end **40, 40'** of the respective container **4** at the lower surface **41'** thereof, opposite to the upper one **41** intended to receive the products to be stored.

To this end, the gripping means may comprise at least one first male engagement element, which in the embodiments illustrated in FIGS. 6, 10 and 11 is defined respectively by the wheel **R,** by the tip of the cam **CAM'** and by the end of the piston or actuator **GAO'.**

In any case, said at least one first male engagement element can be designated to be engaged in a corresponding at least one second female engagement element **4C** arranged on the lower surface **41'** of each of the containers **4.** In the embodiments of the attached drawings, the at least one second female engagement element **4C** consists of an interspace between two appendages extending from the lower surface **41'** of each head **4T1, 4T2,** as for example illustrated in FIG. 7.

Suitably, the gripping means can be movable between an inoperative position in which the at least one first male engagement element **R, CAM', GAO'** is mutually disengaged with the corresponding at least one second female engagement element **4C** and a working position in which said at least one first male engagement element **R, CAM', GAO'** is mutually engaged with the corresponding at least one second female engagement element 4C so as to allow the displacement of the corresponding container **4** between the inoperative and working positions.

It is clear that the aforementioned male or female elements may also be inverted, i.e. the gripping means may include at least one female engagement element and the containers **4** may include at least one male engagement element, without departing from the scope of protection of the attached claims.

The shape of the male and female engagement elements may be any, provided that it is suitable to allow the mutual engagement thereof for the purposes of driving the container during the translations along the horizontal directions and locking it during transportation along the vertical direction.

The second displacement units **250, 250'** can be substantially similar to the means for promoting the motion of the first displacement units **255, 255',** with motor-driven slide **232** and guide means **230, SL** suitable to guide it along a substantially horizontal translation direction.

The guide means may comprise a rack **230** engaged by pinions **231.**

The motor-driven slide may include gripping means similar to those described above.

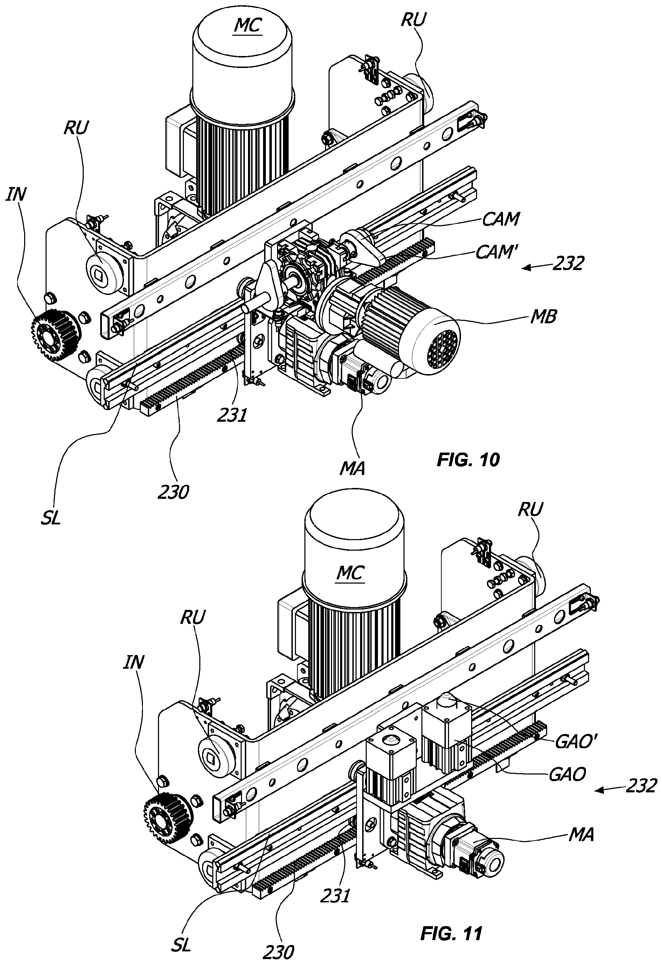

Embodiments of the second displacement units are for example shown in FIGS. 10 and 11.

In order to control all the displacements described above, provided for may be control means which preferably act on both the first and second displacement units.

To this end, the control means may include a microprocessor unit **AE,** for example a PLC, suitably programmed to coordinate the mutual cooperation of the opposite first displacement units **255, 255'** during the displacement of the containers **4** between the inoperative and operative positions and of the second opposite displacement units during the displacement of the containers **4** between the operative and working positions.

Even if the control on both the first and second displacement units will be described hereinafter, it is clear that the control means can also act on the first displacement units **255, 255'** only without departing from the scope of protection of the attached claims.

The coordination will occur so that one or more of the operations carried out by the first displacement units **255, 255'** are synchronised, and that is to say a movement carried out by one or more components of a displacement unit corresponds to a concordant movement carried out by one or more components of the other displacement unit.

The first and preferably the second displacement units **255, 255'; 250, 250'** are decoupled physically. In other words, there is no physical connection between the displacement units, for example by means of bars, catenaries or similar means.

On the other hand, the first and preferably second displacement units **255, 255'; 250, 250'** are electronically coupled to each other by means of the control means. In other words, between one or more of the electric motors of the first and preferably second displacement units there can be created a so-called electric axis, aimed at coupling them without physical connection.

The electric motors **MC** of the motor-driven carriages **SV** and preferably the electric motors **MA** of the motor-driven slides **232** of the first and preferably second displacement units **255, 255'; 250, 250'** and preferably the electric motors **MB** of the gripping means of the first and/or second displacement units **255, 255'; 250, 250'** are electronically coupled to each other by means of an electric axis.

Thanks to such characteristic, should the length of the storage unit vary, there will be no need to replace the displacement units, but only disconnect one of the upright elements **2** and replace or modularly extend the reinforcement crosspieces **3** and/or the base sections **1'.**

The storage unit will also be lighter and easier to ship.

In particular, the storage unit **1** can be shipped preferably by pre-assembling the upright elements 2.

In light of the above, it is clear that the invention attains the pre-set objectives.

The invention is susceptible to numerous modifications and variants all falling within the scope of protection of the invention, which is defined by the attached claims.

Even though the invention has been described with reference to the attached figures, the reference numbers utilised in the description and in the claims are meant for improving the intelligibility of the invention and thus do not limit the claimed scope of protection in any manner whatsoever.

## Claims

1. An automated storage tower for storing products, in particular longitudinal products, comprising:
- a plurality of containers or support planes (**4**) for the products to be stored, each container or support plane (**4**) comprising two opposite ends (**40, 40'**);
- a support structure (**10**) comprising at least one first plurality of superimposed first storage seats (**22**), each first storage seat (**22**) being suitable to house a respective container or support plane **(4);**
- displacement means (**SV, 232, CAM, AE**) capable of displacing each container or support plane (**4**) between an inoperative position which it takes when it is in the respective first storage seat **(22)** and a working position of the products spaced from the latter;
wherein said support structure (**20**) comprises at least one pair of upright elements (**2**) defining respective facing first planes **(π1, π1'),** substantially parallel and mutually connected, each upright element (**2**) comprising at least one first plurality of superimposed first support crosspieces (**20, 20'**) defining respective first axes (**Y1, Y1'**) substantially parallel to or lying on said first planes **(π1, π1'),** each of said first support crosspieces (**20**) cooperating with the corresponding opposite first support crosspiece (**20'**) to support a respective container or support plane (**4**) at the respective opposite ends (**40, 40'**), each of the first storage seats **(22)** being defined by a respective pair of opposite first support crosspieces **(20, 20');**
wherein said displacement means **(SV, 232, CAM, AE)** include at least one pair of first displacement units **(255, 255')** each one susceptible to interact with a respective opposite end **(40, 40')** of each container or support plane **(4)** so as to displace it between said inoperative position and an operative position coinciding with said working position or spaced from the latter, said displacement means **(SV, 232, CAM, AE)** further comprising control means **(AE)** acting at least on said first displacement units **(255, 255')** for controlling the mutual cooperation thereof during the displacement of the container or support plane **(4)** between said inoperative and operative positions;
wherein each upright element **(2)** comprises a respective first displacement unit **(SV, 232)** and respective first guide means **(23, PC)** thereof along a first translation direction **(X, X')** substantially parallel to or lying on a respective first plane **(π1, π1')** and substantially perpendicular to a respective first axis **(Y1, Y1');**
**characterized in that:**
- said control means (AE) are configured to act on each first displacement unit (SV, 232, CAM) so as to promote a second translation of each container or support plane (4) between said transportation and operative positions along a second translation direction substantially parallel to or coinciding with said first axis (Y1, Y1') and substantially perpendicular to said first translation direction (X, X');
- there is no physical connection between said first displacement units (255, 255'), so that the first displacement units (255, 255') are physically decoupled;
- each of said first displacement units **(255, 255')** comprises a respective motor-driven carriage (**SV**) movable along the respective first translation direction (**X, X'**), said motor-driven carriage **(SV)** including first motion promotion means **(232, SL)** susceptible to act on each container or support plane **(4)** to displace it along a respective first axis **(Y1, Y1'),** respectively along a respective first axis **(Y1, Y1')** and said second translation direction;
- each motor-driven carriage **(SV)** comprises at least one respective first electric motor **(MC),** said control means **(AE)** being configured to electronically couple the first electric motors **(MC)** of the motor-driven carriages **(SV)** by means of an electric axis;
- at least said support structure **(10)** consists of metal sections mutually connected in a removable manner.

2. Automated storage unit according to claim 1, wherein said control means **(AE)** are configured to act on each first displacement unit **(SV, 232, CAM)** so as to promote the displacement of each container or support plane **(4)** between said inoperative and operative positions passing through an intermediate transportation position in which the container or support plane **(4)** translates along said first translation direction **(X, X')** transported by said first displacement units **(255, 255').**

3. Automated storage unit according to the preceding claim, wherein said control means **(AE)** are configured to act on each first displacement unit **(SV, 232, CAM)** so as to promote a first translation of each container or support plane **(4)** between said inoperative and transportation positions along a respective first axis **(Y1, Y1'),**

4. Automated storage unit according to one or more of the preceding claims, wherein said first motion promotion means **(232, SL)** comprise a first motor-driven slide **(232)** and second guide means **(230, SL)** of the latter along a third translation **(Y3, Y3'),** said first motor-driven slide **(232)** including first gripping means (L, **CAM, GAO)** acting selectively on the respective end **(40, 40')** of the respective container or support plane **(4)** to drive the latter in motion.

5. Automated storage unit according to one or more of the preceding claims, further comprising a working bay **(6),** each container or support plane **(4)** being in said working position when it is in said working bay **(6),** wherein said displacement means **(SV, 232, AE)** further include a pair of second displacement units **(250, 250')** each one susceptible to interact with a respective opposite end **(40, 40')** of each container or support plane **(4)** to displace it between said operative position and said working position, said control means **(AE)** acting also on said second displacement units **(250, 250')** to control the mutual cooperation thereof during the displacement of the container or support plane **(4)** between said operative and working positions.

6. Automated storage unit according to the preceding claim, wherein said second displacement units **(250, 250'),** a second motor-driven slide **(232)** and third guide means **(230, SL)** of the latter along a fourth translation direction **(Y4, Y4')** substantially perpendicular with respect to said first translation direction **(X, X'),** said second motor-driven slide **(232)** including second gripping means (L, **CAM, GAO)** acting selectively on the respective end **(40, 40')** of the respective container or support plane (4) to drive it along said fourth translation direction **(Y4, Y4').**

7. Automated storage unit according to one or more of the preceding claims, wherein each of said containers or support planes **(4)** has an upper surface **(41)** intended to house the products to be stored and an opposite lower surface **(41'),** said first and/or second gripping means **(L, CAM, GAO)** being sized and/or configured to act on the respective end **(40, 40')** of the respective container or support plane **(4)** at the lower surface **(41')** thereof.

8. Automated storage unit according to the preceding claim, wherein said first and/or second gripping means (L, **CAM, GAO)** comprise at least one first male or female engagement element **(R, CAM', GAO')** intended to be engaged in a corresponding at least one second male or female engagement element **(4C)** arranged on the lower surface (**41'**) of each of said containers or support planes **(4).**

9. Automated storage unit according to the preceding claim, wherein said first and/or second gripping means **(L, CAM, GAO)** are movable between an inoperative position wherein said at least one first male or female engagement element **(R, CAM', GAO')** is mutually disengaged with said corresponding at least one second female or male engagement element **(4C)** and a working position wherein said at least one first male or female engagement element **(R, CAM', GAO')** is mutually engaged with said corresponding at least one second female or male engagement element **(4C)** to allow the displacement of the corresponding container or support plane **(4)** between said inoperative and working positions.

10. Automated storage unit according to one or more of the preceding claims, wherein said support structure **(10)** comprises at least one pair of base sections **(1)** and reinforcement crosspieces **(3)** defining respective fourth axes **(Z)** substantially perpendicular to said first planes **(π1, π1'**) arranged on opposite sides with respect to said upright elements **(2),** base sections **(1),** reinforcement crosspieces (3) and upright elements **(2)** being mutually connected by means of first removable fixing means.

11. 12. Automated storage unit according to one or more of the preceding claims, wherein said upright elements **(2)** comprise structural sections substantially parallel to said first translation direction **(X, X'),** the latter and said first support crosspieces **(20, 20')** being mutually connected by means of second removable fixing means.

12. Automated storage unit according to one or more of the preceding claims, wherein each of said upright elements (2) comprises at least one of the end zones which can be mutually removably connected with at least one other corresponding upright element **(2).**

13. A method implemented by means of a processor for controlling the first **(SV, 232)** and second **(250, 250')** displacement units of an automated storage unit for the displacement of a container or support plane **(4)** between the inoperative and working positions, the automated storage unit being according to one or more of the preceding claims when dependent from claim 4 and claim 6, wherein:
• in case of displacement of the container or support plane **(4)** from the inoperative position to the working position, the method sequentially includes the following steps:
a) engagement of the container or support plane **(4)** by said first gripping means **(L, CAM, GAO);**
b) translation of the container or support plane **(4)** from the inoperative position to the transportation position along the respective first axis **(Y1, Y1')** by the first motor-driven slides **(232);**
c) translation of the container or support plane **(4)** to the transportation position along said first translation direction **(X, X')** by said motor-driven carriages **(SV);**
d) translation of the container or support plane **(4)** from the transportation position to the operative position along said second translation direction **(Y1, Y1')** by said first motor-driven slides **(232);**
e) disengagement of the container or support plane **(4)** by said first gripping means **(L, CAM, GAO)**
f) engagement of the container or support plane **(4)** by said second gripping means **(L, CAM, GAO);**
g) translation of the container or support plane **(4)** from the operative position to the working position along said second translation direction **(Y1, Y1')** by said second motor-driven slides **(250, 250');**
h) disengagement of the container or support plane **(4)** by said second gripping means **(L, CAM, GAO);**
• in case of displacement of the container or support plane **(4)** from the working position to the inoperative position, the method includes steps h) to a) in reverse order, the engagement and disengagement steps being opposite.

## Patentansprüche

1. Automatisierter Lagerturm zur Lagerung von Produkten, insbesondere länglichen Produkten, umfassend:
- eine Vielzahl von Behältern oder Tragebenen (4) für die zu lagernden Produkte, wobei jeder Behälter oder jede Tragebene (4) zwei gegenüberliegende Enden (40,40') umfasst;
- eine Tragstruktur (10) umfassend wenigstens eine erste Vielzahl von einander überlagernden ersten Lagersitzen (22), wobei jeder erste Lagersitz (22) dazu ausgebildet ist, jeweils einen Behälter oder eine Tragebene (4) aufzunehmen;
- Verlagerungsmittel (SV, 232, CAM, AE), die dazu ausgebildet sind, jeden Behälter oder jede Tragebene (4) zwischen einer Nicht-Betriebsstellung, die diese einnehmen, wenn sie sich in dem jeweils ersten Lagersitz (22) befinden, und einer Arbeitsstellung der Produkte, die von dem Letzteren beabstandet sind, zu verlagern;
wobei die Tragstruktur (10) wenigstens ein Paar aufrechter Elemente (2) umfasst, die jeweils einander zugewandte Ebenen (π1, π1') umfasst, die sich im Wesentlichen parallel und miteinander verbunden erstrecken, wobei jedes aufrechte Element (2) wenigstens eine erste Vielzahl von überlagerten Trag-Querstücken (20,20') umfasst, die jeweils erste Achsen (Y1, Y1') definieren, welche sich im Wesentlichen parallel zu oder in den ersten Ebenen (π1, π1') erstrecken, wobei jedes der ersten Trag-Querstücke (20) mit dem zugehörigen gegenüberliegenden ersten Trag-Querstück (20') zusammenwirkt, um jeweils einen Behälter oder eine Tragebene (4) an den jeweiligen gegenüberliegenden Enden (40,40') zu unterstützen, wobei jeder der Lagersitze (22) jeweils durch ein Paar von gegenüberliegenden ersten Trag-Querstücken (20,20') definiert ist;
wobei die Verlagerungsmittel (SV, 232, CAM, AE) wenigstens ein erstes Paar von ersten Verlagerungseinheiten (255,255') umfassen, von denen jede dazu ausgebildet ist, mit einem jeweils gegenüberliegenden Ende (40,40') eines jeden Behälters oder einer jeden Tragebene (4) zusammenzuwirken, um diese zwischen der Nicht-Betriebsstellung und einer Betriebsstellung zu verlagern, die mit der Arbeitsstellung übereinstimmt oder von dieser beabstandet ist, wobei die Verlagerungsmittel (SV, 232, CAM, AE) weiterhin Steuerungsmittel (AE) umfassen, die wenigstens auf die ersten Verlagerungseinheiten (255,255') wirken, um das Zusammenwirken derselben während der Verlagerung des Behälters oder der Tragebene (4) zwischen der Nicht-Betriebsstellung und der Betriebsstellung zu steuern;
wobei jedes aufrechte Element (2) wenigsten eine jeweils erste Verlagerungseinheit (SV, 232) und jeweilige erste Führungsmittel (23, PC) derselben entlang einer ersten Verlagerungsrichtung (X, X') umfasst, die sich im Wesentlichen parallel zu oder in der jeweiligen ersten Ebene (π1, π1') und im Wesentlichen senkrecht zu einer jeweiligen ersten Achse (Y1, Y1') erstreckt;
**dadurch gekennzeichnet, dass:**
- Die Steuerungsmittel (AE) dazu ausgebildet sind, auf jede erste Verlagerungseinheit (SV, 323, CAM) zu wirken, um eine zweite Verlagerung jedes Behälters oder jeder Tragebene (4) zwischen den Transport- und Betriebsstellungen entlang einer zweiten Verlagerungsrichtung zu bewirken, die sich im Wesentlichen parallel zu oder in der ersten Achse (Y1, Y1') und im Wesentlichen senkrecht zu der ersten Verlagerungsrichtung (X, X') erstreckt;
- keine physikalische Verbindung zwischen den ersten Verlagerungseinheiten (255,255') besteht, sodass die ersten Verlagerungseinheiten (255,255') physikalisch entkoppelt sind;
- jede der ersten Verlagerungseinheiten (255,255') einen jeweils motorangetriebenen Wagen (SV) umfasst, der entlang der jeweils ersten Verlagerungsrichtung (X, X') bewegbar ist, wobei der motorangetriebene Wagen (SV) erste, eine Bewegung vermittelnde Mittel (232, SL) umfasst, die dazu ausgebildet sind, auf jeden Behälter oder jede Tragebene (4) einzuwirken, um diese entlang der jeweiligen ersten Achse (Y1, Y1') jeweils entlang der ersten Achse (Y1, Y1') und der zweiten Verlagerungsrichtung zu verlagern;
- jeder motorangetriebene Wagen (SV) wenigstens einen jeweils ersten elektrischen Motor (MC) umfasst, die Steuerungsmittel (AE) dazu ausgebildet sind, die ersten elektrischen Motoren (MC) der motorangetriebenen Wagen (SV) mittels einer elektrischen Achse zu koppeln;
- wenigstens die Tragstruktur (10) aus Metall Abschnitten besteht, die miteinander lösbar verbunden sind.

2. Automatisierte Lagereinheit nach Anspruch 1, bei welcher die Steuerungsmittel (AE) dazu ausgebildet sind, auf jede erste Verlagerungseinheit (SV, 232, CAM) zu wirken, um die Verlagerung eines jeden Behälters oder einer jeden Tragebene (4) zwischen der Nicht-Betriebsstellung und der Betriebsstellung durch eine Zwischen-Transportstellung zu bewirken, in welcher der Behälter oder die Tragebene (4) entlang der ersten Verlagerungsrichtung (X, X') über die ersten Verlagerungseinheiten (255,255') transportiert wird.

3. Automatisierte Lagereinheit nach dem vorhergehenden Anspruch, bei welcher die Steuerungsmittel (AE) ausgebildet sind, um auf jede erste Verlagerungseinheit (SV, 232, CAM) zu wirken, um eine erste Verlagerung jedes Behälters oder jeder Tragebene (4) zwischen der Nicht-Betriebsstellung und Verlagerungsstellungen entlang einer jeweiligen ersten Achse (Y1, Y1') zu bewirken.

4. Automatisierte Lagereinheit nach einem oder mehreren der vorhergehenden Ansprüche, bei welcher die ersten eine Bewegung vermittelnde Mittel (232, SL), einen ersten motorangetriebenen Schlitten (232) und zweite Führungsmittel (230, SL) für die Letzteren entlang einer dritten Verlagerung (Y3, Y3') umfassen, wobei der erste motorangetriebene Schlitten (232) erste Greifermittel (L, CAM, GAG) umfasst, die jeweils selektiv auf die jeweiligen Enden (40,40') der jeweiligen Behälter oder Tragebene (4) wirken, um Letzte in Bewegung zu versetzen.

5. Automatisierte Lagereinheit nach einem oder mehreren der vorhergehenden Ansprüche, weiterhin umfassend eine Arbeitsbucht (6), wobei jeder Behälter oder jede Transportebene (4) sich in der Arbeitsposition befindet, wenn diese sich in der Arbeitsbucht (6) befindet, wobei die Verlagerungsmittel (SV, 232, AE) weiterhin ein Paar zweite Verlagerungseinheiten (250,250') umfasst, die jeweils ausgebildet sind, um jeweils mit einem gegenüberliegenden Ende (40,40') eines jeden Behälters oder einer Tragebene (4) zusammenzuwirken, um diese zwischen einer Betriebsstellung und der Arbeitsstellung zu verlagern, wobei die Steuerungsmittel (AE) auch auf die zweiten Verlagerungseinheiten (250,250') wirken, um das gegenseitige Zusammenwirken derselben während der Verlagerung der Behälter oder der Tragebene (4) zwischen der Betriebs- und Arbeitsstellung zu steuern.

6. Automatisierte Lagereinheit nach dem vorhergehenden Anspruch, bei welcher die zweiten Verlagerungseinheiten (250,250'), ein zweiter motorangetriebener Schlitten (232) und dritte Führungsmittel (230, SL) der Letzteren entlang einer vierten Verlagerungsrichtung (Y4, Y4') im Wesentlichen senkrecht bezüglich der ersten Verlagerungsrichtung (X, X'), wobei der motorangetriebene Schlitten (232) zweite Greifermittel (L, CAM, GAG) umfasst, die selektiv auf die jeweiligen Enden (40,40') des jeweiligen Behälters oder der jeweiligen Tragebene (4) wirken, um diese entlang der vierten Verlagerungsrichtung (Y4, Y4') anzutreiben.

7. Automatisierte Lagereinheit nach einem der vorhergehenden Ansprüche, bei welcher jeder Behälter oder jede Tragebene (4) eine obere Fläche (41) aufweist, die dazu ausgebildet ist, die zu lagernden Produkte aufzunehmen, und weiterhin eine gegenüberliegende untere Fläche (41 A) aufweist, wobei die ersten und/oder zweiten Greifermittel (L, CAM, GAG) so bemessen und/oder konfiguriert sind, dass sie auf die jeweiligen Enden (40,40') der jeweiligen Behälter oder Tragebene (4) an deren unteren Fläche (41') einwirken können.

8. Automatisierte Lagereinheit nach dem vorhergehenden Anspruch, bei welcher die ersten und/oder zweiten Greifermittel (L, CAM, GAG) wenigstens ein erstes männliches oder weibliches Eingriffselement (R, CAM', GAO') aufweisen, welches zum Eingriff mit wenigstens einem zweiten männlichen oder weiblichen Eingriffselement (4C) ausgebildet ist, das an der unteren Fläche (41 ') jedes Behälters oder jeder Tragebene (4) angeordnet ist.

9. Automatisierte Lagereinheit nach dem vorhergehenden Anspruch, bei welcher die ersten und/oder zweiten Greifermittel (L, CAM, GAO) zwischen einer Nicht-Betriebsstellung, in welcher die ersten oder zweiten weiblichen oder männlichen Eingriffselemente (R, CAM', GAO') sich jeweils in Eingriff mit den entsprechenden wenigstens einen zweiten weiblichen oder männlichen Eingriffselementen (4C) befinden und einer Arbeitsstellung, in welcher wenigstens ein erstes männliches oder weibliches Eingriffselement (R, CAM', GAO') jeweils mit dem entsprechenden wenigstens einen zweiten weiblichen oder männlichen Eingriffselement (4C) zusammenwirkt, um eine Verlagerung des entsprechenden Behälters oder der Tragebene (4) zwischen der Nicht-Betriebsstellung und der Arbeitsstellung zu erlauben.

10. Automatisierte Lagereinheit nach einem oder mehreren der vorhergehenden Ansprüche, bei welcher die Tragstruktur (10) wenigstens ein Paar von Basisabschnitten (1) und verstärkte Querstücke (3) umfasst, die jeweils vierte Achsen (Z) definieren, welche sich im Wesentlichen senkrecht zu den ersten Ebenen (π1, π1') erstrecken, die an gegenüberliegenden Seiten relativ zu den aufrechten Elementen (2), Basisabschnitten (1), Verstärkungs - Querstücken (3) und aufrechten Elementen (2) angeordnet sind, die gegenseitig mittels erster lösbarer Befestigungsmittel verbunden sind.

11. Automatisierte Lagereinheit nach einem oder mehreren der vorhergehenden Ansprüche, wobei die aufrechten Elemente (2) Strukturabschnitte umfassen, die sich im Wesentlichen parallel zu der ersten Verlagerungsrichtung (X, X') erstrecken wobei die letzteren und die 1. Trag-Querstücke (20,20') miteinander mittels zweiter lösbarer Befestigungsmittel verbunden sind.

12. Automatisierte Lagereinheit nach einem oder mehreren der vorhergehenden Ansprüche, wobei jedes der aufrechten Elemente (2) jeweils wenigstens eines der Endbereiche umfasst, die jeweils lösbar mit wenigstens einem anderen entsprechenden aufrechten Element (2) verbunden sind.

13. Verfahren, welches mittels eines Prozessors zur Steuerung der ersten (SV, 232) und zweiten Verlagerungseinheiten (250,250') einer automatisierten Lagereinheit zur Verlagerung eines Behälters oder eine Tragebene (4) zwischen Nicht-Betriebsstellung und Arbeitsstellungen implementiert ist, wobei die automatisierte Lagereinheit gemäß einem oder mehrerer der vorstehenden Ansprüche ausgebildet ist, soweit diese von den Ansprüchen 4 und 6 abhängig ist, wobei:
• im Falle einer Verlagerung des Behälters oder der Tragebene (4) von der Nicht-Betriebsstellung in die Arbeitsstellung das Verfahren folgende Schritte umfasst:
a) Ineingriffbringen des Behälters oder der Tragebene (4) mittels erster Greifermittel (L, CAM, GAG);
b) Verlagerung des Behälters oder der Transportebene (4) aus der Nicht-Betriebsstellung in die Transportstellung jeweils entlang einer ersten Achse (Y1, Y1') durch die ersten motorangetriebenen Schlitten (232);
c) Verlagerung des Behälters oder der Tragebene (4) in die Transportstellung entlang der ersten Verlagerungsrichtung (X, X') durch die motorangetriebenen Wagen (SV);
d) Verlagerung der Behälter oder Tragebene (4) aus der Transportstellung in die Betriebsstellung entlang der zweiten Verlagerungsrichtung (Y1, Y1 `) mittels der ersten motorangetriebenen Schlitten (232);
e) Außereingriffbringen des Behälters oder der Tragebene (4) durch die zweiten Greifermittel (L, CAM, GAG);
f) Ineingriffbringen der Behälter oder der Tragebene (4) mittels der zweiten Greifermittel (L, CAM, GAG);
g) Verlagerung der Behälter oder Tragebene (4) von der Betriebsstellung in die Arbeitsstellung entlang der zweiten Verlagerungsrichtung (Y1, Y1') durch die zweiten motorangetriebenen Schlitten (250,250');
h) Außereingriffbringen der Behälter oder der Tragebene (4) mittels der zweiten Greifermittel (L, CAM, GAG);
• im Falle der Verlagerung der Behälter oder der Tragebene (4) von der Arbeitsstellung in die Nicht-Betriebsstellung umfasst das Verfahren die Schritte h) und a) in umgekehrter Reihenfolge, wobei die Schritte des Ineingriffbringens und Außereingriffbringens entgegengesetzt sind.

## Revendications

1. Tour de stockage automatisée servant au stockage de produits, en particulier de produits longitudinaux, comprenant :
- une pluralité de conteneurs ou de plans de support (4) pour les produits à stocker, chaque conteneur ou plan de support (4) comprenant deux extrémités opposées (40, 40') ;
- une structure de support (10) comprenant au moins une première pluralité de premiers sièges de stockage (22) superposés, chaque premier siège de stockage (22) étant adapté pour loger un conteneur respectif ou un plan de support (4) ;
- des moyens de déplacement (SV, 232, CAM, AE) capables de déplacer chaque conteneur ou plan de support (4) entre une position inopérante qu'il prend lorsqu'il se trouve dans le premier siège de stockage (22) respectif et une position de travail des produits espacés de ce dernier ;
dans lequel ladite structure de support (20) comprend au moins une paire d'éléments verticaux (2) définissant des premiers plans se faisant face (π1, π1') respectifs, sensiblement parallèles et reliés mutuellement, chaque élément vertical (2) comprenant au moins une première pluralité de premières traverses de support (20, 20') superposées définissant des premiers axes (Y1, Y1') respectifs sensiblement parallèles auxdits premiers plans (π1, π1'), ou reposant sur ceux-ci, chacune desdites premières traverses de support (20) coopérant avec la première traverse de support (20') opposée correspondante pour supporter un conteneur ou un plan de support (4) respectif au niveau des extrémités opposées (40, 40') respectives, chacun des premiers sièges de stockage (22) étant défini par une paire respective de premières traverses de support (20, 20') opposées ;
dans lequel lesdits moyens de déplacement (SV, 232, CAM, AE) comprennent au moins une paire de premières unités de déplacement (255, 255') chacune susceptible d'interagir avec une extrémité opposée (40, 40') respective de chaque conteneur ou plan de support (4) de manière à le déplacer entre ladite position inopérante et une position opérante coïncidant avec ladite position de travail ou espacée de cette dernière, lesdits moyens de déplacement (SV, 232, CAM, AE) comprenant en outre des moyens de contrôle (AE) agissant au moins sur lesdites premières unités de déplacement (255, 255') pour contrôler la coopération mutuelle de celles-ci pendant le déplacement du conteneur ou du plan de support (4) entre lesdites positions inopérante et opérante ;
dans lequel chaque élément vertical (2) comprend une première unité de déplacement (SV, 232) respective et des premiers moyens de guidage (23, PC) respectifs de celle-ci le long d'une première direction de translation (X, X') sensiblement parallèle à un premier plan (π1, π1')respectif, ou reposant sur celui-ci, et sensiblement perpendiculaire à un premier axe (Y1, Y1') respectif ;
**caractérisée en ce que** :
- lesdits moyens de contrôle (AE) sont configurés pour agir sur chaque première unité de déplacement (SV, 232, CAM) de manière à favoriser une deuxième translation de chaque conteneur ou plan de support (4) entre ledit transport et lesdites positions opérantes le long d'une deuxième direction de translation sensiblement parallèle audit premier axe (Y1, Y1'), ou coïncidant avec celui-ci, et sensiblement perpendiculaire à ladite première direction de translation (X, X') ;
- il n'existe aucune liaison physique entre lesdites premières unités de déplacement (255, 255'), de sorte que les premières unités de déplacement (255, 255') sont découplées physiquement ;
- chacune desdites premières unités de déplacement (255, 255') comprend un chariot motorisé (SV) respectif mobile le long de la première direction de translation (X, X') respective, ledit chariot motorisé (SV) comprenant des premiers moyens favorisant le mouvement (232, SL) susceptibles d'agir sur chaque conteneur ou plan de support (4) pour le déplacer le long d'un premier axe (Y1, Y1') respectif, respectivement le long d'un premier axe (Y1, Y1') respectif et de ladite deuxième direction de translation ;
- chaque chariot motorisé (SV) comprend au moins un premier moteur électrique (MC) respectif, lesdits moyens de contrôle (AE) étant configurés pour coupler électroniquement les premiers moteurs électriques (MC) des chariots motorisés (SV) au moyen d'un axe électrique ;
- au moins ladite structure de support (10) se compose de sections métalliques reliées mutuellement d'une manière amovible.

2. Unité de stockage automatisée selon la revendication 1, dans laquelle lesdits moyens de contrôle (AE) sont configurés pour agir sur chaque première unité de déplacement (SV, 232, CAM) de manière à favoriser le déplacement de chaque conteneur ou plan de support (4) entre lesdites positions inopérantes et opérantes traversant une position de transport intermédiaire dans laquelle le conteneur ou plan de support (4) effectue une translation le long de ladite première direction de translation (X, X') transportée par lesdites premières unités de déplacement (255, 255').

3. Unité de stockage automatisée selon la revendication précédente, dans laquelle lesdits moyens de contrôle (AE) sont configurés pour agir sur chaque première unité de déplacement (SV, 232, CAM) de manière à favoriser une première translation de chaque conteneur ou plan de support (4) entre lesdites positions inopérantes et de transport le long d'un premier axe (Y1, Y1') respectif.

4. Unité de stockage automatisée selon une ou plusieurs des revendications précédentes, dans laquelle lesdits premiers moyens favorisant le mouvement (232, SL) comprennent une première lame motorisée (232) et des deuxièmes moyens de guidage (230, SL) de cette dernière le long d'une troisième translation (Y3, Y3'), ladite première lame motorisée (232) comprenant des premiers moyens de préhension (L, CAM, GAO) agissant de manière sélective sur l'extrémité (40, 40') respective du conteneur ou du plan de support (4) respectif pour entraîner ce dernier en mouvement.

5. Unité de stockage automatisée selon une ou plusieurs des revendications précédentes, comprenant en outre une baie de travail (6), chaque conteneur ou plan de support (4) étant dans ladite position de travail lorsqu'il se trouve dans ladite baie de travail (6), dans laquelle lesdits moyens de déplacement (SV, 232, AE) comprennent en outre une paire de deuxièmes unités de déplacement (250, 250') chacune susceptible d'interagir avec une extrémité opposée (40, 40') respective de chaque conteneur ou plan de support (4) pour le déplacer entre ladite position opérante et ladite position de travail, lesdits moyens de contrôle (AE) agissant également sur lesdites deuxièmes unités de déplacement (250, 250') pour contrôler la coopération mutuelle de celles-ci pendant le déplacement du conteneur ou du plan de support (4) entre lesdites positions opérante et de travail.

6. Unité de stockage automatisée selon la revendication précédente, dans laquelle lesdites deuxièmes unités de déplacement (250, 250'), une deuxième lame motorisée (232) et des troisièmes moyens de guidage (230, SL) de cette dernière le long d'une quatrième direction de translation (Y4, Y4') sensiblement perpendiculaire par rapport à ladite première direction de translation (X, X'), ladite deuxième lame motorisée (232) comprenant des deuxièmes moyens de préhension (L, CAM, GAO) agissant de manière sélective sur l'extrémité respective (40, 40') du conteneur ou du plan de support (4) respectif pour l'entraîner le long de ladite quatrième direction de translation (Y4, Y4').

7. Unité de stockage automatisée selon une ou plusieurs des revendications précédentes, dans laquelle chacun desdits conteneurs ou plans de support (4) présente une surface supérieure (41) prévue pour loger les produits à stocker et une surface inférieure opposée (41'), lesdits premiers et/ou deuxièmes moyens de préhension (L, CAM, GAO) étant dimensionnés et/ou configurés pour interagir sur l'extrémité respective (40, 40') du conteneur ou du plan de support (4) respectif au niveau de la surface inférieure (41') de celui-ci.

8. Unité de stockage automatisée selon la revendication précédente, dans laquelle lesdits premiers et/ou deuxièmes moyens de préhension (L, CAM, GAO) comprennent au moins un premier élément de mise en prise mâle ou femelle (R, CAM', GAO') prévu pour être mis en prise dans au moins un deuxième élément de mise en prise mâle ou femelle (4C) correspondant agencé sur la surface inférieure (41') de chacun desdits conteneurs ou plans de support (4).

9. Unité de stockage automatisée selon la revendication précédente, dans laquelle lesdits premiers et/ou deuxièmes moyens de préhension (L, CAM, GAO) sont mobiles entre une position inopérante dans laquelle ledit au moins un premier élément de mise en prise mâle ou femelle (R, CAM', GAO') est désengagé mutuellement avec ledit au moins un deuxième élément de mise en prise femelle ou mâle (4C) correspondant et une position de travail dans laquelle ledit au moins un premier élément de mise en prise mâle ou femelle (R, CAM', GAO') est mutuellement en prise avec ledit au moins un deuxième élément de mise en prise femelle ou mâle (4C) correspondant pour permettre le déplacement du conteneur ou du plan de support (4) correspondant entre lesdites positions inopérantes et de travail.

10. Unité de stockage automatisée selon une ou plusieurs des revendications précédentes, dans laquelle ladite structure de support (10) comprend au moins une paire de sections de base (1) et des traverses de renforcement (3) définissant des quatrièmes axes (Z) respectifs sensiblement perpendiculaires auxdits premiers plans (π1, π1')agencés sur des côtés opposés par rapport auxdits éléments verticaux (2), des sections de base (1), des traverses de renforcement (3) et des éléments verticaux (2) étant mutuellement reliés au moyen de premiers moyens de fixation amovibles.

11. Unité de stockage automatisée selon une ou plusieurs des revendications précédentes, dans lequel lesdits éléments verticaux (2) comprennent des sections structurelles sensiblement parallèles à ladite première direction de translation (X, X'), cette dernière et lesdites premières traverses de support (20, 20') étant mutuellement reliées au moyen de deuxièmes moyens de fixation amovibles.

12. Unité de stockage automatisée selon une ou plusieurs des revendications précédentes, dans laquelle chacun desdits éléments verticaux (2) comprend au moins une des zones d'extrémité qui peut être reliée mutuellement de manière amovible avec au moins un autre élément vertical (2) correspondant.

13. Un procédé mis en oeuvre au moyen d'un processeur servant à contrôler les première (SV, 232) et deuxième (250, 250') unités de déplacement d'une unité de stockage automatisée pour le déplacement d'un conteneur ou un plan de support (4) entre les positions inopérantes et de travail, l'unité de stockage automatisée étant selon une ou plusieurs des revendications précédentes lorsqu'elles dépendent de la revendication 4 et de la revendication 6, dans lequel :
. en cas de déplacement du conteneur ou du plan de support (4) de la position inopérante à la position de travail, le procédé comprend séquentiellement les étapes suivantes :
a) la mise en prise du conteneur ou du plan de support (4) par lesdits premiers moyens de préhension (L, CAM, GAO) ;
b) la translation du conteneur ou du plan de support (4) de la position inopérante à la position de transport le long du premier axe (Y1, Y1') respectif par les premières lames motorisées (232) ;
c) la translation du conteneur ou du plan de support (4) à la position de transport le long de ladite première direction de translation (X, X') par lesdits chariots motorisés (SV) ;
d) la translation du conteneur ou du plan de support (4) de la position de transport à la position opérante le long de ladite deuxième direction de translation (Y1, Y1') par lesdites premières lames motorisées (232) ;
e) le désengagement du conteneur ou du plan de support (4) par lesdits premiers moyens de préhension (L, CAM, GAO) ;
f) la mise en prise du conteneur ou du plan de support (4) par lesdits deuxièmes moyens de préhension (L, CAM, GAO) ;
g) la translation du conteneur ou du plan de support (4) de la position opérante à la position de travail le long de ladite deuxième direction de translation (Y1, Y1') par lesdites deuxièmes lames motorisées (250, 250') ;
h) le désengagement du conteneur ou du plan de support (4) par lesdits deuxièmes moyens de préhension (L, CAM, GAO) ;
. en cas de déplacement du conteneur ou du plan de support (4) de la position de travail à la position inopérante, le procédé comprend les étapes h) à a) en ordre inverse, les étapes de mise en prise et de désengagement étant opposées.
